# EUROPEAN PATENT SPECIFICATION

(11) **EP 0 529 984 B1**
(45) Date of publication and mention of the grant of the patent: **20.10.1999**
(21) Application number: 92307689.7
(22) Date of filing: 21.08.1992
(51) Int. Cl.: H01M 4/66

(54) **Process for preparing burnished current collectors**
Verfahren zur Herstellung von trommelpolierten Stromkollektoren
Procédé de préparation de collecteurs de courant brunis

(30) Priority: 23.08.1991 US 749022
(43) Date of publication of application: 03.03.1993
(73) Proprietor: EVEREADY BATTERY COMPANY, INC., St. Louis Missouri 63164 (US)
(72) Inventor: Hetz, Dale R., North Ridgeville, Ohio 44039 (US); Nardi, John C., Brunswick, Ohio 44212 (US)
(74) Representative: Lord, Hilton David

(56) References cited:
- EP-A- 0 415 607
- EP-A- 0 416 772
- DE-A- 4 031 806
- FR-A- 2 634 596
- PATENT ABSTRACTS OF JAPAN vol. 11, no. 20 (E-472)(2467) 20 January 1987 & JP-A-61 190 861 ( SANYO ELECTRIC CO. LTD. ) 25 August 1986
- PATENT ABSTRACTS OF JAPAN vol. 14, no. 105 (E-895)26 February 1990 & JP-A-1 307 160 ( MITSUI MINING & SMELTING CO. LTD. ) 12 December 1989

## Description

The present invention relates to a process for the preparation of alkaline electrochemical cells which contain no or substantially no mercury, which cells have a burnished anode current collector and which provide an effective amount of electrochemical energy to be useful as batteries.

Alkaline electrochemical cells typically contain an alkaline electrolyte, such as potassium hydroxide, a cathode comprised of a metal oxide, such as manganese dioxide, and a zinc anode. These cells provide excellent performance and are used throughout the world in many consumer applications.

A characteristic of these cells which is detrimental to their performance and safety is the formation of hydrogen gas. Hydrogen gas can be formed by undesirable chemical reactions which occur at the surface of the anode current collector. An increase in the amount of gas formed results in a corresponding increase in the internal pressure of the cell. If this pressure increase is allowed to build up and is not relieved, the cells can eventually leak.

The problem of hydrogen gas formation, and the resulting impediments to the safety and performance of the cell, has been largely solved by the addition of mercury to the anode. Mercury in the anode plates onto the surface of the collector thereby inhibiting the formation of gas and thus enhancing the performance of the electrochemical cell. However, mercury is known to be harmful to the environment and, as is well known, mercury may add to environmental pollution when cells are eventually discarded.

In order to address this environmental concern attempts have been made to reduce the amount of mercury used in the cell without adversely affecting its activity, for example by adding zinc corrosion inhibitors to the cell. Examples of these inhibitors include lead, indium, cadmium, thallium, gold, silver, tin, gallium and compounds that incorporate these elements. These inhibitors have been alloyed with the zinc, deposited on the zinc, included in the electrolyte and deposited on the collector. Organic inhibitors, such as polyethylene glycol, have also been tried. Cells adopting such a lowered mercury system have been commercialised under the name "Ultra-low Mercury"™. However such cells still retain a significant amount of mercury, i.e. about 250 parts of mercury per million parts based on total battery weight.

Unfortunately, these known zinc corrosion inhibitors do not reliably permit the total removal of mercury from the cell. For example, indium is an effective inhibitor at certain levels of mercury, but surprisingly, at lower levels of mercury, indium is not as effective. The organic inhibitors are effective for cells that have not been discharged before storage, but they do not inhibit gassing for cells that have been partially discharged before storage.

Certain cells which are free of mercury are known. However, a deficiency found in some of these mercury free cells is the occurrence of an unexpected depression in the voltage of the cell during discharge of the cell. These deviations from the expected voltage curve are usually temporary. Typically, the cell voltage recovers and the cell proceeds to provide a reasonable amount of electrical service to the customer. This type of temporary depression and then recovery in voltage is referred to as a "dip". However, in some cases, the voltage does not recover from the early dip and the useful life of the cell is terminated prematurely thereby resulting in a "dud". Both of these problems, dips and duds, are undesirable.

US-A-4,942,101 describes certain mercury free cells and is directed to an alkaline electrochemical cell that (1) is free of mercury, (2) incorporates specified quantities of selected organic stablilisation compounds in the zinc powder, (3) utilises an anode current collector that is constituted, at least superficially, by a substance selected from: pure zinc, pure cadmium, indium, and gallium, and (4) the surface of the current collector has been modified without melting of the metal so as to increase its effective surface area. However, Figures five, six, seven and eight of US-A-4,942,101 illustrate alkaline cells whose voltages dip during discharge and then recover.

While the combination of components described in US-A-4,942,101 result in a mercury free cell, the use in a commercially viable mass production process of a current collector that has been physically modified is potentially cumbersome and therefore expensive. It is also to be noted that certain of the cells with this particular combination of components suffer from voltage dip as described.

In view of these disadvantages, there is a need for an alkaline electrochemical cell that has a low mercury content or is free of mercury, does not exhibit either a temporary depression (referred to herein as a "dip") or a permanent drop (referred to herein as a "dud") in the voltage of the cell, does not exhibit excessive bulging and can be economically mass produced in a commercially viable process.

FR-A-2634596 discloses a current collector comprising a plurality of copper or zinc fibres covered preferably with indium.

JP-A-61190861 discloses covering the surface of a base metal with indium by plating or immersing in an indium dispersion, followed by application of a mixture of cadmium oxide powder and binder to form a cadmium anode.

US-A-4525439 discloses burnishing a metal plate current collector prior to application of a thermoplastic coating for bonding with a hot melt adhesive, in order to provide a barrier seal against leakage of electrolyte.

We have found that the problems above can be overcome by providing an anode current collector, which is burnished and has a layer of indium deposited on it, in an alkaline electrochemical cell.

Thus, the present invention provides a process for preparing an anode current collector suitable for use in an alkaline electrochemical cell substantially free of mercury, which process comprises burnishing a zinc-containing anode current collector and at the same time or thereafter contacting the collector with a solution containing indium ions to provide a coating of indium on said current collector.

In the process according to the present invention, it is preferred that the anode current collector is burnished and at the same time is contacted with a solution containing indium ions.

In a further preferred embodiment, the process of the present invention for burnishing anode current collectors for electrochemical cells, comprises the steps of:
a) adding zinc-containing current collectors to a container that contains a burnishing material and a solution comprised of soluble indium ions; and
b) agitating the collectors in the presence of the solution for a time effective to burnish the collectors and for the indium to associate with the collectors.

On the burnished anode current collector there is a surface deposit of indium. Suitably, this surface deposit takes the form of a layer of indium. This layer may be continuous or discontinuous and of any appropriate thickness, for example a few microns in thickness, and is suitably formed from indium ions in intimate association with the surface of the current collector. The layer of indium is, according to the invention, deposited by contacting the current collector with a solution containing indium ions. The layer is not pre-formed, for example as a sheet, before application to the current collector.

Particularly preferably, the indium is associated with the surface of the anode current collector at a concentration of between about 0.5 µg/cm² and about 200 µg/cm².

The process of the present invention can be used to provide an alkaline electrochemical cell comprising:
a) a container, open at one end and closed at the other end;
b) a cathode, positioned within the container and comprising a metal oxide as the cathode component;
c) an anode, positioned within the container in physical isolation from the cathode and comprising zinc as the active anode component;
d) an electrically insulating separator positioned between the cathode and the anode;
e) an alkaline electrolyte solution in simultaneous contact with the anode, cathode and separator; and
f) a collector assembly, positioned within and hermetically secured to the open end of the container, the collector assembly comprising a zinc-containing anode current collector that has been burnished in a solution containing soluble indium.

Preferably, the anode current collector has been agitated in a solution containing soluble indium ions for a time effective to burnish the collectors and for the indium to associate with the collector.

Further, the process of the present invention can be used to provide an alkaline electrochemical cell substantially free of mercury, comprising a cathode comprised of a metal oxide as the active cathode component, an anode comprised of zinc as the active anode component, an alkaline electrolyte, a separator and a collector assembly, wherein the collector assembly comprises a burnished zinc-containing anode current collector associated with the surface of which is a layer of indium, whereby the components are arranged in a sealed container in a manner effective to provide electrochemical energy; and whereby after the cell is partially discharged through an electrical resistor to about 1.2 V, the cell does not exhibit leakage of the cell components when stored under storage conditions of 21°C for ninety days.

The alkaline electrochemical cells show a reduction in the occurrence of temporary depressions or permanent drops in voltage, reduced gas formation and bulging under conditions of normal use and storage, and provide an effective amount of electrochemical energy to be useful as batteries. Further, the current collectors are readily usable in commercially viable mass production processes.

The electrochemical cells typically comprise a container which is open at one end and closed at the other end, a cathode comprising a metal oxide as the active cathode component, an anode comprising zinc as the active anode component, an alkaline electrolyte, a separator and a collector assembly. The collector assembly comprises a zinc-containing anode current collector which is burnished and has a layer of indium associated with the surface thereof.

Suitably the cell comprises an alkaline electrolyte, a separator, a current collector assembly, a cathode and an anode generally arranged in a sealed container in a manner effective to provide electrochemical energy, i.e. when the cell is placed in a circuit, electrochemical energy is provided to the circuit. The cell has terminals of opposite polarity and one terminal is in contact with the cathode whilst the other is in contact with the anode. The cell should be sealed in a manner effective to contain the cell's components in the container under conditions of transport and use. The cell construction typically includes a cupped metallic can, suitably constructed of steel, nickel or other metal and may be nickel plated in whole or in part. A tubular cathode containing the active cathode material and conductor may be lined on the inner surface of the can, and a separator suitably made of a non-woven cellulosic or polymer fibre may be lined on the inner surface of the tubular cathode. In this construction, the can is in contact with the cathode, and thus forms the cathode terminal, and the current collector assembly, comprising a zinc-containing anode current collector which is burnished and has a surface deposit of indium, seals the open end of the container and comprises the anode's current collector.

The current collector assembly comprises a burnished zinc-containing anode current collector and a sealing member. In one process of the invention, the collector is burnished in a solution containing soluble indium ions. By "burnishing" is meant that the surface of the collector is cleaned of surface oxides and residual contaminants until a clean shiny surface results. Burnishing is a technique known in the art, and it may be performed by a variety of techniques, such as by brushing or by agitation with a suitable abrasive material, for example. Suitable techniques for burnishing are described hereinafter in relation to a further aspect of the present invention.

Suitable zinc-containing anode current collectors for use in the process of the present invention have a surface which is substantially free of surface oxides and upon which surface is distributed a layer of indium. In accordance with an embodiment of the present invention, as hereinabove defined, the layer of indium is depositable upon the surface of a zinc-containing anode current collector by contacting a burnished zinc-containing anode current collector with a solution containing indium ions. Optionally, the steps of burnishing the current collector and contacting of the current collector with the solution containing indium ions may take place in a single step, i.e. burnishing of the current collector is performed in a solution containing indium ions.

The indium may be present on the surface of the zinc-containing anode current collector in the form of a continuous or a discontinuous layer. It is preferred that the indium forms a continuous coating on the surface of the current collector. Although the specific choice of indium containing solution is not critical to the present invention, this should be chosen so as to provide for an appropriate coating of the current collector within a reasonable time. Suitably, an appropriate indium containing compound is dissolved in a solvent, of which water is most preferred. The solute for the coating solution may be any suitable indium-containing compound(s). It is preferred that the indium is employed in its salt form, and most preferred are the chloride and nitrate salts of indium.

The amount of indium associated with the surface of the collector suitable for use in the process of the present invention should preferably be at least 0.5 µg/cm² of the collector's surface area. The amount of indium associated with the surface of the current collector may be increased substantially, for example up to an amount of 200 µg/cm², without having any detrimental effect on the performance of the cell. The only limitation on the use of such a high concentration of indium is one of cost effectiveness. In accordance with the present invention, it is preferred that the indium is present at at least 1.0 µg/cm² of the collector's surface area.

The zinc-containing anode current collectors employed in the process of this invention are suitably made from brass. A typical brass anode current collector has a composition of about 65% to 70% copper and about 30% to 35% zinc. An example of a preferred alloy is a copper-zinc alloy.

In a copper-zinc alloy current collector, the copper is required to provide adequate conductivity for the current collector, while the zinc should be selected to be compatible with the zinc anode. Preferably, the copper should comprise at least 50% by weight of the copper-zinc alloy with the remainder substantially zinc. A small amount of lead may also be present. A suitable copper-zinc alloy for use as anode current collector is the copper alloy C26000 (named according to the Standards Handbook of the Copper Development Association Inc, Greenwich, Connecticut, USA) which is publicly available from alloy manufacturers and contains from 68.5 to 71.5% by weight copper, less than 0.07% by weight lead, and the remainder zinc. It is advantageous that the brass current collector be free of iron and nickel. Other suitable brass alloys used as current collectors, named as above, include alloys C27000 and C33000.

In addition to a copper-zinc alloy, any zinc-containing conductive material compatible with the electrochemical system of the cell may be used as the alloy material of the anode current collector. Thus, the anode current collector may be a conductive alloy composed of zinc or brass containing a dispersion of lead throughout the alloy. A minor amount of cadmium in the anode current collector may also contribute to reduced gassing. The cadmium may be dispersed along with the lead throughout the anode current collector. The cadmium may be added in amount of at least 1000 parts per million based on the weight of the anode current collector. Preferably, the dispersed cadmium is present at from 1500 parts per million to 2000 parts per million.

The current collector assembly may additionally comprise a sealing member, which is commonly made of plastic and shaped in the form of a disc. When present, this member suitably fits tightly inside the open end of the container and may be hermetically sealed to the container by conventional cell closing techniques. Examples of suitable sealing members are described in, for example, US-A-3,314,824 and US-A-4,255,499. In this embodiment, the anode current collector is electronically conductive and extends through the sealing member such that the current collector forms an electrically conductive path between the anode and the anodic terminal of the cell.

Preferably, the electrochemical cells are substantially free of mercury. By "substantially free of mercury" is meant that the total amount of mercury present in all of the components of the cell is such that discarding of the cell does not result in environmental pollution. Typically, the cells of this invention have less than 50 parts of mercury per million parts by total weight of the cell. Preferably, the mercury is present at less than 25 parts per million.

More preferably, there is zero-added mercury to the cell. By "zero-added" is meant that no mercury is added to any of the cell components. Typically, a residual amount of mercury is present in many natural products. An example of a natural product which inherently contains mercury is commercially available "pure zinc", which may contain about 20 parts of mercury per billion parts by weight of zinc. This "pure zinc" often contains much less than 20 parts of mercury per billion parts by weight of zinc.

Thus, in the preferred zero-added mercury cells, the only mercury present in the cell is the residual amount that is naturally present in the cell components, i.e. no extra mercury, or mercury source, is included in the cell. Therefore, disposal of the cell, either before or after complete exhaustion of the cell, does not result in the addition of "added" mercury to the environment, i.e. the only mercury which is added to the environment is the mercury which was an inherent constituent of the components of the cell before assembly of the cell.

For the zero-added mercury cells, the amount of mercury present will preferably be less than the level that may be detected analytically. Typically, this amount of mercury is less than 10 parts per million by total weight of the cell, preferably less than 5 parts per million, more preferably less than 2 parts per million, and most preferably less than 1 part per million.

The alkaline electrolyte component of the cell is suitably an aqueous alkaline solution, such as potassium hydroxide or sodium hydroxide. The concentration of the solution selected should be sufficient to provide for ionic conductivity. Typically, in the assembled cell the concentration of the alkaline electrolyte preferably ranges from about 30% to about 40% w/v.

Examples of suitable metal oxides for use as the active cathode component include manganese dioxide and silver oxide, of which manganese dioxide is preferred. Electrolytic manganese dioxide (EMD), a widely available commercial product, is the preferred cathode component. EMD is prepared by plating manganese dioxide from a manganese sulphate plating solution onto an electrode. The deposited manganese dioxide is subsequently removed from the electrode and recovered. One source of EMD is TOSOH Corporation, a Japanese company.

In addition to the metal oxide, the cathode further comprises an ionically conductive component, as a conductor. Of the many types of known conductors, synthetic graphite is preferably used. Synthetic graphite is readily commercially available. One source is Lonza LTD, a Swiss company.

The cathode may further comprise a binder. Examples of suitable binders include polytetrafluoroethylene and polyethylene.

The majority of the cathode is suitably formed from a metal oxide with a conductive amount of the graphite, with an effective amount of binder often also present. Typically, the metal oxide may comprise between about 80 to about 85% by weight of the total cathode weight. When a binder is employed, the binder suitably comprises less than about 0.5% by weight. The remainder of the cathode may be comprised of graphite and electrolyte solution. The electrolyte solution is generally present in an amount sufficient to wet the dry components, and to provide a mixture that may be moulded. The cathodes may be prepared by mixing the components together and dispensing the mix into the container followed by moulding or compressing of the mix against the inside of the container.

The cells comprise a zinc containing anode. Preferably, the zinc is low expansion zinc, and is in powder form. The anode is formed by a combination of the powdered zinc with a binder, and optionally further components, and an amount of the electrolyte solution to form a gel. Typically, the anode gel expands when it is discharged and then stored.

The preferred zinc for use in the cells may be selected according to the amount of iron in the zinc. Advantageously, the zinc has less than 10 parts of iron per million parts by weight of zinc. Preferably, the zinc contains less than 5 ppm of iron. More preferred is zinc that contains less than 3 ppm of iron.

The cells preferably further comprise additives that inhibit the corrosion of zinc. One beneficial component that may be added to the cell to inhibit the corrosion of zinc is an ethylene oxide polymer and derivatives thereof. The ethylene oxide polymers comprise ethylene oxide moieties which may be substituted with organic and inorganic moieties. Suitable polymers include phosphate esters of ethylene oxide polymers, such as those disclosed in US-A-4,195,120; perfluorated organic compounds of the ethoxylated fluoroalcohol type, such as those disclosed in US-A-4,606,984; and alkyl and polyethoxyl alcohol sulphides, such as those disclosed in US-A-4,781,999. Preferred polymers are di- and triethylene glycol, the polyethylene glycols having an average molecular weight range of about 190 to about 7000, and their mono- and diethers and esters. Suitable ethers of polyethylene glycols are lower alkyl ethers, wherein the alkyl component has from one to four carbon atoms, and suitable esters of polyethylene glycols are C₁₋₄alkanoate esters. Examples of ether derivatives include methoxy diethylene glycol and the methoxy and ethoxy polyethylene glycols. Examples of ester derivatives include polyethylene glycol acetate.

The preferred ethylene oxide polymers are the polyethylene glycols and methoxy polyethylene glycols having molecular weights averaging from about 300 to 700.

The ethylene oxide polymers may be used singly or in combination. They are generally soluble in water and may be added as a water solution to the cell. The ethylene oxide polymer may be added directly to the zinc during the production of the anode gel. Alternatively and additionally, the polymer additive may be included in water that is employed to pre-wet the separator in order to facilitate the wetting of the separator by the electrolyte. The polymer may then migrate to the zinc surface as the cell comes to equilibrium.

The ethylene oxide polymer is generally employed in the cell in an amount sufficient to inhibit the corrosion reaction between the zinc and the alkaline electrolyte. In general, beneficial effects are obtained with proportions of ethylene oxide polymer in excess of about 0.001 mg per gram of zinc and up to, for example, about 0.1 mg per gram of zinc. It is preferred that the ethylene oxide polymer is employed at a concentration of about 0.01 mg per gram of zinc.

It may also be desirable to add an indium-containing compound to the anode mix. Suitable compounds include indium hydroxide, indium oxide and indium metal. Preferably, the compounds are soluble in the electrolyte solution. Indium hydroxide is preferred. The amount of indium employed should be an amount sufficient to inhibit the corrosion reaction between the zinc and alkaline electrolyte. This amount is preferably between about 0.001 and about 1 mg per gram of zinc and more preferably, between about 0.05 and about 0.2 mg per gram of zinc.

The indium-containing compound may be added to the anode mix in any manner that will enable it to become associated with the zinc. Preferably it is added directly to the anode mix. Additionally, the indium-containing compound may be added to the electrolyte solution.

The anode may be prepared by mixing the zinc powder, ethylene oxide polymer, optional binder and an amount of electrolyte effective to form a paste or gel. Advantageously, an indium-containing compound is also added. This paste or gel may then be injected into the container.

It is advantageous that space be left in the cell to accommodate any gas that is formed. This space, or void volume, will vary according to the cell size and amount of zinc employed. The larger the cell, generally, the larger the void volume. Typically, the cells of this invention have a void volume of 6% to 12% of the cell's internal volume.

In the process of the present invention, the surface of the collector is cleaned by the burnishing and the indium becomes associated with the cleaned surface of the collector. Association of indium with the cleaned surface of the collector should suitably occur before a detrimental amount of oxidisation at the surface of the collector takes place. It is preferred that association of indium with the cleaned surface of the collector takes place before substantially any oxidisation has occurred. The amount of time for which the collector is in contact with the solution containing indium ions varies according to factors such as the concentration of the indium in the solution, and the desired character of the layer. It is within the skill of the person skilled in the art to determine the time required for indium to associate with the surface of the collector.

Burnishing of the surface of the collector may be accomplished by techniques commonly available in the art, for example, by agitation of a collector with at least one other collector or by use of an abrasive material such as ceramic balls. Suitable ceramic balls are approximately 1/8 inch [0.3 cm] in diameter, for example, type M ceramic balls made by Coors Ceramic Company of Golden, Colorado, USA. Other suitable ceramic material of these dimenesions are stealite balls made by Union Process of Akron, Ohio, USA.

In one embodiment of the process of the present invention, the current collector is placed in a container holding a burnishing material and a solution comprising soluble indium ions. Any one of the components, i.e. the container itself, the collector or the solution, is then agitated for a time sufficient to ensure burnishing of the collector and for indium to become associated with the surface of the collector.

It is preferred that, in this embodiment of the process of the invention, the collectors, burnishing material and solution are all combined in a container, such as a tumbling machine. Optionally, a rinsing agent, such as JET DRY™, manufactured by Ecolab, Inc. of Broadview, Ohio, USA, may be included in the combination of materials to be agitated. The combination is then agitated, such as by tumbling or rotating, for a time sufficient to burnish the collectors and to allow the indium to become associated with the collectors. The length of time which the collectors should be agitated is dependent upon the concentration of indium in the solution. As the concentration of indium in the solution is decreased, the period of time which the collectors are agitated should be increased to ensure that a minimum amount of indium is associated with the collectors. Conversely, as the concentration of indium in the solution is increased, then the collectors may be agitated for a shorter period of time and still be associated with the minimum amount of indium.

After the collectors and burnishing material have been agitated for a sufficient period of time to associate a minimum amount of indium on the surface of the collectors, the burnishing material and solution are removed from the combination. After rinsing and drying, the collectors are ready for use.

In a further embodiment of the process of the invention the collectors are burnished and then, in a separate step, only the burnished collectors are contacted with a solution containing soluble indium ions.

In this embodiment of the burnishing process according to the invention, the collectors and burnishing material are combined, with a liquid carrier as necessary, in a container such as a tumbling machine. Optionally, a rinsing agent such as Dreher A-13™, manufactured by Dreher Corporation of Attleboro, Maryland, USA, may be included in the container. The mix is then agitated, such as by tumbling or rotating, for a time sufficient to burnish the collectors. The burnished collectors are then separated and removed from the container and these are then combined in a container with a solution containing soluble indium ions.

The time between removing the burnished collectors from the container and associating the collectors with a solution containing soluble indium ions should be limited in order to prevent oxidation of the burnished collector surface. The time between burnishing and placing the burnished collectors in a solution containing indium ions should, under normal conditions and circumstances, be less than twenty-four hours, although the burnished collector may be stored indefinitely under an inert atmosphere. Preferably, the time will not exceed twelve hours. Most preferably, the burnished collectors will be combined with the solution containing soluble indium ions within one hour after the collectors have been burnished. After the burnished collectors have been associated with the indium ions for a sufficient period of time to allow the indium to become associated with the collectors, the solution is removed and the collectors may be rinsed and dried. The treated collectors may be used immediately or stored for later use.

The alkaline electrochemical cells may be obtained in a variety of ways with different combinations of the components. A preferred combination is the use of a cathode comprising electrolytic manganese dioxide, an anode comprising low expansion zinc and an electrolyte of potassium hydroxide. A further preferred combination comprises electrolytic manganese dioxide, with synthetic graphite, for the cathode, an anode comprising low-iron or low expansion zinc, ethylene oxide polymer as zinc corrosion inhibitor, an indium-containing compound and a brass current collector. A slightly less preferred combination includes the same components except for the indium-containing compound. Consistently good results are obtained with different variations in type of zinc, anode collector and other components when used in combination with both the ethylene oxide polymer and indium-containing compound.

The cell may be made using any conventional procedure for assembly of alkaline electrochemical cells. Thus, for example, the cell may be made by first moulding the cathode mix into the cell container and then moulding the mix into the form of a tube. Preferably, two separator strips are formed into a basket lining the interior of the cathode mix tube so as to enclose the anode, made of a mixture of active anode material, electrolyte, and, optionally, an electrolyte-swellable binder such as a polyacrylic acid. In this construction, a current collector assembly is then inserted into the open end of the container so that the current collector is in contact with the anode, and a sealing member is added to form a hermetic seal with the top inside wall of the container. The cell is closed with a cover which, in this construction, is arranged to be in contact with the anode current collector extending through the sealing member, which cover forms the anode terminal of the cell, and the cell is sealed. Preferably this cell construction does not envisage a venting means that would vent due to the normal pressure generated in the cell during a normal discharge.

The electrochemical cells typically have an initial voltage of about 1.58 V as determined by the difference in potential between the anode and the cathode. Preferably, the cells are prepared so as to exhibit no leakage of the cell components after discharging the cells through an electrical resistor to 1.2 V, and after being stored at 21°C for ninety days. More preferably, the cells are prepared so as to exhibit no leakage after being discharged to 0.8 V and then stored for the stated period. The cells may also be prepared so as to exhibit no leakage after being discharged through an electrical resistor to 1.2 V and then stored at 45°C for thirty days, and preferably, after being discharged to 0.8 V and so stored. More preferably, the cells are prepared so as to exhibit no leakage when discharged through an electrical resistor to 1.2 V, and then stored at 71°C for three days, and preferably, after being discharged to 0.8 V and so stored. Most preferably, the cells are prepared so as to exhibit no leakage when discharged through an electrical resistor to 1.2 V, and then stored at 71°C for seven days and preferably, after being discharged to 0.8 V and so stored.

Such discharge and storage conditions are representative of the actual use made of the cells or batteries. For example, the batteries may be used in a device, such as a radio but, often, the battery is typically not fully discharged. The device and battery may then be put aside for a period before they are used again. The cells exhibit no leakage when conventionally used and so stored.

The value of the electrical resistance may vary according to cell size. Typically, the cells exhibit no leakage when discharged through an electrical circuit that has an electrical resistance value of 20Ω or less depending on cell size. For example, a conventional D-size cell or battery (2.406 inches [6.lcm] high by 1.344 inches [3.4cm] diameter) may be discharged to 1.2 V through a 2.2Ω resistor and stored without showing leakage. A C-size (1.969 inches [5.0cm] high by 1.031 inches [2.6cm] diameter) or AA-size (1.988 inches [5.04cm] high by 0.563 inches [1.43cm] diameter) cell or battery may be discharged through a 3.9Ω resistor to 1.2 V and stored without showing leakage. An AAA-size cell or battery (1.745 inches [4.43cm] high by 0.41 inch [1.04cm] diameter) may be discharged through a 5Ω resistor to 1.2 V and then stored without showing leakage. An AAAA-size cell or battery (1.648 inches [4.19cm] high by 0.310 inch [0.79cm] diameter) may be discharged through a 20Ω resistor to 1.2 V and then stored without showing leakage.

Under normal discharge conditions, hydrogen gas is formed and will cause the cells to bulge. If the cells bulge too much, they will leak. The actual amount of bulge that causes leakage will vary according to cell size. For C-size cells, a bulge of greater than 40 mils [1.016mm] will often cause leakage. The cells, regardless of size, exhibit a degree of bulge less than the amount that will typically cause leakage of the cell components.

By "leakage" of the cell components is meant that there is no leakage of the components attributable to undesirable gas formation. It is always possible to have leakage due to poor cell construction such as improper sealing of the cell. These improper and poor performing construction conditions are known. Also, "leakage" as used in this specification is different from creepage of the electrolyte. By nature, aqueous alkaline electrolyte solutions creep along the surface of metals. The amount of creepage in a normally constructed cell is small, and is not equivalent to the type of leakage of the components that occurs when an undesirable amount of gas is formed.

The cells also exhibit an effective amount of performance. For example, C-size cells which contain 23.4 g of manganese dioxide and 9.1 g of zinc provided 45 to 50 hours of usable service when discharged through a 10Ω resistor for four hours per day.

The following examples further illustrate the present invention.

### EXAMPLES

### Example 1

Several AA size batteries are constructed with zinc anodes, manganese dioxide cathodes, and potassium hydroxide electrolytes. Indium hydroxide is added to the anode. The anode collectors are shaped like a nail and are made from C26000 brass. The collectors are burnished in a tumbling barrel with 1/8 inch [0.3175 cm] diameter ceramic balls and a solution containing 1.09 g of indium chloride per 1000 ml of deionised water. The collectors do not show any surface oxides and have an indium concentration of 1.6 µg per square centimeter on the surface of the collector.

One sample of cells are tested in a straight shelf test, i.e., they are stored at various temperatures and for various periods of time, and the net bulge of the cells is measured. Fifteen cells are stored at 71°C for four weeks. These cells show an average bulge of 1.6 mils [0.0406mm]. Five other cells are stored at 45°C for one month and show an average bulge of 1.2 mils [0.0304mm]. Another five cells are stored at 21°C for one month and show an average bulge of 0.3 mils [0.0076mm].

Another number of cells are partially discharged to 0.8 V and then stored at various temperatures and for various times and the gross bulge is measured. Ten cells are stored at 71°C for four weeks and show an average bulge of 7.1 mils [0.1802mm]. Five other cells are stored at 45°C for one month and show an average bulge of 1.4 mils [0.0355mm]. Another five cells are stored at 21°C for one month and show an average bulge of 0.2 mils [0.0051mm].

### Example 2

Several thousand D-size nail shaped current collectors, made from C26000 brass, are burnished by combining the collectors in a suitable tumbling machine with one-eighth inch [0.3175cm] diameter ceramic balls and a solution containing 1.09 g of indium chloride per 1000 ml of deionised water plus a small quantity of "Jet Dry"^{™} rinsing agent. The loaded tumbling machine is rotated for ninety minutes. After separating the collectors from the burnishing solution and ceramic material, the collectors are analysed for the quantity of indium on the surface of the collectors. The analysis shows a concentration of indium of 8.0 µg/cm² of collector surface area.

## Claims

1. A process for preparing an anode current collector suitable for use in an alkaline electrochemical cell substantially free of mercury, which process comprises burnishing a zinc-containing anode current collector and at the same time or thereafter contacting the collector with a solution containing indium ions to provide a coating of indium on said current collector.

2. A process according to claim 1, wherein said coating is a continuous coating.

3. A process according to claim 1 or claim 2, wherein said current collector is contacted with said solution for a time sufficient to provide a coating of indium on said current collector of between about 0.5 µg/cm² and about 200 µg/cm².

4. A process according to claim 3 wherein said coating of indium on said current collector is of at least 1.0 µg/cm².

5. A process according to any preceding claim, wherein said burnishing is effected in the solution containing indium ions.

6. A process according to any preceding claim, wherein said burnishing is effected by agitating a plurality of current collectors together.

7. A process according to any preceding claim, wherein said burnishing is effected by agitation in the presence of an abrasive material.

8. A process according to claim 7, wherein the abrasive material is in the form of ceramic balls of approximately 1/8 inch [0.3 cm] in diameter.

9. A process according to any preceding claim, wherein the current collector is brass.

10. A process as defined in any preceding claim, other than claim 5 and any claim as dependent on claim 5, wherein burnishing is effected as a separate step to that of contacting the current collector with a solution containing indium ions, the time between burnishing the collectors and associating the collectors with a solution containing soluble indium ions being limited in order to prevent oxidation of the burnished collector surface.

11. A process according to claim 10, wherein the time between burnishing and placing the burnished collectors in a solution containing indium ions is less than twenty-four hours.

12. A process according to claim 11, wherein the time does not exceed twelve hours.

13. A process according to claim 11, wherein the time is less than one hour.

## Patentansprüche

1. Verfahren zur Herstellung eines Anodenstromkollektors, der sich zur Verwendung in einer alkalischen elektrochemischen Zelle eignet, die im wesentlichen quecksilberfrei ist, wobei das Verfahren aufweist: Polieren eines zinkhaltigen Anodenstromkollektors und gleichzeitig oder danach Inkontaktbringen des Kollektors mit einer Indium-Ionen enthaltenden Lösung, um eine Indiumschicht auf den Stromkollektor aufzubringen.

2. Verfahren nach Anspruch 1, wobei die Schicht eine zusammenhängende Schicht ist.

3. Verfahren nach Anspruch 1 oder Anspruch 2, wobei der Stromkollektor mit der Lösung über eine Zeit in Kontakt gebracht wird, die ausreicht, um auf den Stromkollektor eine Indiumschicht von etwa 0,5 µg/cm² bis etwa 200 µg/cm² aufzubringen.

4. Verfahren nach Anspruch 3, wobei die Indiumschicht auf dem Stromkollektor eine Flächendichte von mindestens 1,0 µg/cm² aufweist.

5. Verfahren nach einem der vorstehenden Ansprüche, wobei das Polieren in der Indium-Ionen enthaltenden Lösung ausgeführt wird.

6. Verfahren nach einem der vorstehenden Ansprüche, wobei das Polieren durch gemeinsames Umrühren mehrerer Stromkollektoren ausgeführt wird.

7. Verfahren nach einem der vorstehenden Ansprüche, wobei das Polieren durch Umrühren in Gegenwart eines Schleifmittels ausgeführt wird.

8. Verfahren nach Anspruch 7, wobei das Schleifmittel die Form von Keramikkugeln von etwa 1/8 Zoll (0,3 cm) Durchmesser hat.

9. Verfahren nach einem der vorstehenden Ansprüche, wobei der Stromkollektor aus Messing besteht.

10. Verfahren nach einem der vorstehenden Ansprüche außer Anspruch 5 und jedem von Anspruch 5 abhängigen Anspruch, wobei das Polieren als ein Schritt ausgeführt wird, der vom Inkontaktbringen des Stromkollektors mit einer Indium-Ionen enthaltenden Lösung getrennt ist, wobei die Zeit zwischen dem Polieren der Kollektoren und dem Vereinigen der Kollektoren mit einer löslichen Indium-Ionen enthaltenden Lösung beschränkt ist, um eine Oxidation der polierten Kollektoroberfläche zu verhindern.

11. Verfahren nach Anspruch 10, wobei die Zeit zwischen dem Polieren und dem Einbringen der polierten Kollektoren in eine Indium-Ionen enthaltende Lösung weniger als vierundzwanzig Stunden beträgt.

12. Verfahren nach Anspruch 11, wobei die Zeit nicht mehr als zwölf Stunden beträgt.

13. Verfahren nach Anspruch 11, wobei die Zeit weniger als eine Stunde beträgt.

## Revendications

1. Procédé de préparation d'un collecteur de courant d'anode approprié à un usage dans une pile électrochimique alcaline substantiellement sans mercure, lequel procédé comprend le brunissage d'un collecteur de courant d'anode contenant du zinc et, en même temps ou ensuite, la mise en contact du collecteur avec une solution contenant des ions d'indium pour donner une couche d'indium sur ledit collecteur de courant.

2. Procédé suivant la revendication 1, dans lequel ladite couche est une couche continue.

3. Procédé suivant la revendication 1 ou la revendication 2, dans lequel ledit collecteur de courant est mis en contact avec ladite solution pendant un temps suffisant pour donner une couche d'indium sur ledit collecteur de courant comprise entre environ 0,5 µg/cm² et environ 200 µg/cm².

4. Procédé suivant la revendication 3, dans lequel ladite couche d'indium sur ledit collecteur de courant vaut au moins 1,0 µg/cm².

5. Procédé suivant l'une quelconque des revendications précédentes, dans lequel ledit brunissage est effectué dans la solution contenant les ions d'indium.

6. Procédé suivant l'une quelconque des revendications précédentes, dans lequel ledit brunissage est effectué en agitant une pluralité de collecteurs de courant ensemble.

7. Procédé suivant l'une quelconque des revendications précédentes, dans lequel ledit brunissage est effectué par une agitation en présence d'un matériau abrasif.

8. Procédé suivant la revendication 7, dans lequel le matériau abrasif se trouve sous la forme de billes en céramique avec un diamètre d'approximativement 1/8 de pouce [0,3 cm].

9. Procédé suivant l'une quelconque des revendications précédentes, dans lequel le collecteur de courant est en laiton.

10. Procédé suivant l'une quelconque des revendications précédentes, autre que celui de la revendication 5 et de n'importe quelle revendication dépendante de la revendication 5, dans lequel le brunissage est effectué sous forme d'une étape séparée de celle de la mise en contact du collecteur de courant avec une solution contenant des ions d'indium, le temps entre le brunissage des collecteurs et l'association des collecteurs avec une solution contenant des ions solubles d'indium étant limité dans le but d'empêcher l'oxydation de la surface des collecteurs brunis.

11. Procédé suivant la revendication 10, dans lequel le temps entre le brunissage et le positionnement des collecteurs brunis dans une solution contenant des ions d'indium est inférieur à vingt-quatre heures.

12. Procédé suivant la revendication 11, dans lequel le temps ne dépasse pas douze heures.

13. Procédé suivant la revendication 11, dans lequel le temps est inférieur à une heure.
